Europäisches Patentamt

European Patent Office

Office européen des brevets

(19)

(11) Veröffentlichungsnummer: **0 160 300 B1**

(12) **EUROPÄISCHE PATENTSCHRIFT**

(45) Veröffentlichungstag der Patentschrift: **12.06.91**

(21) Anmeldenummer: **85105283.7**

(22) Anmeldetag: **30.04.85**

(51) Int. Cl.⁵: **H04L 12/42**, H04L 12/50, H04L 12/56

(54) Verfahren und Schaltungsanordnung zum Herstellen von Verbindungen und Übertragen von Nachrichtensignalen zwischen Teilnehmerstellen bzw. Leitungsanschlussgruppen in einer eine Ringleitungsanordnung aufweisenden Fernmeldevermittlungsanlage, insbesondere einer Datenvermittlungsanlage.

(30) Priorität: **04.05.84 DE 3416582**
**04.05.84 DE 3416542**

(43) Veröffentlichungstag der Anmeldung:
**06.11.85 Patentblatt 85/45**

(45) Bekanntmachung des Hinweises auf die Patenterteilung:
**12.06.91 Patentblatt 91/24**

(84) Benannte Vertragsstaaten:
**AT BE CH DE FR GB IT LI LU NL SE**

(56) Entgegenhaltungen:
**EP-A- 0 006 145**
**EP-A- 0 069 382**
**GB-A- 2 120 055**
**US-A- 4 032 899**

**IBM TECHNICAL DISCLOSURE BULLETIN,
Band 7, Nr. 7, Dezember 1964, New York,
USA, L.T. O'Connor, "Multiplex Interface Selection Circuit", seiten 592, 593**

(73) Patentinhaber: **Siemens Aktiengesellschaft
Wittelsbacherplatz 2
W-8000 München 2(DE)**

(72) Erfinder: **Kerschner, Gunther
Kemptener Strasse 61
W-8000 München 71(DE)**
Erfinder: **Wurzenberger, Johann
Vorderrissstrasse 14a
W-8000 München 82(DE)**
Erfinder: **Hausmann, Herbert, Dipl.-Ing.
Daxerstrasse 55
W-8037 Oching(DE)**
Erfinder: **Eckel, Giselher, Dipl.-Ing.
Schuckerstrasse 14
W-8000 München 70(DE)**
Erfinder: **Friedrich, Peter, Dipl.-Ing.
Mayrhoferring 36
W-8031 Seefeld 2(DE)**

**Beschreibung**

Die Erfindung betrifft ein verfahren und eine Schaltungsanordnung zum Herstellen von Verbindungen für eine Übertragung von Nachrichtensignalen zwischen Teilnehmereinrichtungen, die über Leitungsanschlußgruppen mit einer Fernmeldevermittlungsanlage, insbesondere mit einer Datenvermittlungsanlage, verbunden sind, in welcher die Leitungsanschlußgruppen zusammen mit Rechnern an eine Ringleitungsanordnung angeschlossen sind und diese Rechner jeweils einer der Leitungsanschlußgruppen zugeordnet sind sowie über Informationen bezüglich der Zuordnung zwischen den einzelnen Leitungsanschlußgruppen und den Rechnern verfügen.

Es ist bereits ein Vermittlungssystem bekannt (US-A- 4 032 899), bei dem eine Mehrzahl von Leitungsanschlußmoduln und eine Mehrzahl von Vermittlungsprozessormoduln an eine Busleitungsanordnung angeschlossen sind. Jeder Leitungsanschlußmodul weist eine Gruppe von Übertragungsleitungen auf. Die Vermittlungsprozesormoduln sind jeweils einem Leitungsanschlußmodul bzw. einer Gruppe von Übertragungsleitungen fest zugeordnet. In jedem Vermittlungsprozessormodul sind Tabellen enthalten, in denen vorgegebene Zuordnungen zwischen je einem Vermittlungsprozessormodul und der zugehörigen Gruppe von Übertragungsleitungen gespeichert sind.

Der Aufbau von Verbindungen erfolgt mit Hilfe einer speziellen Steuereinheit, die den für die jeweilige Verbindung in Frage kommenden Leitungsanschlußmoduln und Vermittlungsprozessormoduln Informationen für eine nachfolgende Datenübertragung zuführt.

Für die Speicherung dieser Informationen stehen in den einzelnen Leitungsanschlußmoduln und Vermittlungsprozessormoduln entsprechende Tabellen zur Verfügung. Dabei sind in diesen Tabellen lediglich solche Informationen gespeichert, welche von dem jeweiligen Leitungsanschlußmodul bzw. Vermittlungsprozessormodul bei einer Datenübertragung im Zuge einer zuvor aufgebauten Verbindung benötigt werden. Die Steuerung des Aufbaues von Verbindungn durch die spezielle Steuereinheit sind bei dem bekannten Vermittlungssystem nicht offenbart.

Nach dem Aufbau einer Verbindung zwischen zwei Übertragungsleitungen, die zu unterschiedlichen Leitungsanschlußmoduln gehören, erfolgt die Übertragung von Datensignalen in folgender Weise: Zunächst werden zu übertragende Datensignale in Form eines Datenblockes zu dem der jeweiligen Übertragungsleitung zugeordneten Vermittlungsprozssormodul hin übertragen. Dieser Vermittlungsprozessormodul gibt daraufhin ein Anforderungssignal an denjenigen Vermittlungsprozessormodul ab, dem die abgehende Übertragungsleitung zugeordnet ist. Aufgrund dieses Anforderungssignals wird überprüft, ob die gewünschte Übertragungsleitung bzw. die damit verbundene Teilnehmereinrichtung für eine Signalaufnahme bereit ist. Ist dies der Fall, wird von dem zuletzt genannten Vermittlungsprozessormodul an den zuerst genannten Vermittlungsprozessormodul ein gesondertes Aufforderungssignal abgegeben. Auf die Aufnahme dieses Aufforderungssignals hin überträgt dann dieser Vermittlungsprozessormodul den zuvor aufgenommenen Datenblock direkt zu der in Frage kommenden Übertragungsleitung. Der Vermittlungsprozessormodul, von dem zuvor die Überprüfung der Übertragungsleitung durchgeführt worden ist, ist in diese Übertragung nicht mehr einbezogen. Dies bedeutet, daß bei Auftreten einer Störung in demjenigen Vermittlungsprozessormodul, der praktisch die Datenübertragung steuert, die Übertragung von Datensignalen im Zuge einer bestehenden Verbindung sehr leicht unterbrochen sein kann.

Es sind außerdem Ringleitungssysteme bekannt (US-A- 2 986 602, "IBM Technical Disclosure Bulletin", VOL. 7, No. 7, Dezember 1964, Seiten 592 und 593), bei denen Verbindungen zwischen zwei Teilnehmerstellen bzw. zwischen zwei Gruppen von Teilnehmerstellen über lediglich eine Zentrale (Rechner) aufgebaut werden können. Damit ist jedoch ebenfalls die gewünschte Sicherheit beim Verbindungsaufbau nicht gewährleistet.

Der Erfindung liegt demgemäß die Aufgabe zugrunde, einen Weg zu zeigen, wie bei einem Verfahren und einer Schaltungsanordnung der eingangs genannten Art ein besonders sicherer Verbindungsaufbau und eine sichere Übertragung von Nachrichtensignalen zwischen verschiedenen Teilnehmereinrichtungen bzw. Leitungsanschlußgruppen möglich ist.

Gelöst wird die vorstehend aufgezeigte Aufgabe bei einem Verfahren der eingangs genannten Art erfindungsgemäß dadurch, daß auf die Abgabe eines einen Verbindungsaufbau fordernden Rufsignals von einer rufenden Teilnehmereinrichtung hin ein erster Verbindungsweg über die mit der betreffenden rufenden Teilnehmereinrichtung verbundene Leitungsanschlußgruppe zu dem dieser Leitungsanschlußgruppe zugeordneten Rechner sowie nach Maßgabe von durch die betreffende rufende Teilnehmereinrichtung abgegebenen, eine der übrigen Teilnehmereinrichtungen als rufende Teilnehmereinrichtung bezeichnenden Wahlinformationen ein zweiter Verbindungsweg von dem genannten Rechner her über einen weiteren Rechner und die diesem zugeordnete Leitungsanschlußgruppe zu der betreffenden gerufenen Teilnehmereinrichtung hin eingerichtet werden, daß beim Einrichten eines ersten und zweiten Verbindungsweges Verbindungsinformationen bezüglich der an der betreffenden Verbindung beteiligten rufenden und gerufenen Teilnehmereinrichtungen und der damit verbundenen Leitungsanschlußgruppen in den beiden Rechnern hinterlegt werden und daß nach dem Übertragen eines den Verbindungsaufbau bestätigenden Rufbestätigungssignals von der betreffenden gerufenen Teilnehmereinrichtung zu der betreffenden rufenden Teilnehmereinrichtung hin Nachrichtensignale lediglich unter Einbeziehung eines der beiden Rechner übertragen werden.

Die Erfindung bringt den Vorteil mit sich, daß auf relativ einfache Weise ein gesicherter Verbindungsaufbau ohne Einbeziehung einer speziellen Steuereinrichtung möglich ist. Ein weiterer Vorteil besteht darin, daß durch die Einbeziehung lediglich eines der beim Verbindungsaufbau beteiligten Rechner in die Übertragung von Nachrichtensignalen eine Entlastung der an der Ringleitungsanordnung angeschlossenen Rechner erreicht ist und daß aufgrund der redundanten Speicherung der für die jeweilige Verbindung relevanten Verbindungsinformationen in den beiden beim Verbindungsaufbau beteiligten Rechnern bei Ausfall des in eine Nachrichtensignalübertragung gerade einbezogenen Rechners die jeweilige Verbindung und damit die Übertragung von Nachrichtensignalen durch den verbleibenden Rechner aufrechterhalten werden kann.

Zweckmäßigerweise wird im Normalzustand einer aufgebauten Verbindung derjenige Rechner in die Übertragung von Nachrichtensignalen einbezogen, welcher der mit der rufenden Teilnehmereinrichtung verbundenen Leitungsanschlußgruppe zugeordnet ist. Dies bringt den Vorteil einer einfachen Steuerung bei der Übertragung von Nachrichtensignalen mit sich.

Eine weitere Ausgestaltung der Erfindung besteht darin, daß eine aufgebaute Verbindung auf ein von einer der an dieser Verbindung beteiligten Teilnehmereinrichtungen abgegebenes, über die beiden zuvor am Verbindungsaufbau beteiligten Rechner zu der jeweils anderen Teilnehmereinrichtung übertragenes Auslösesignal hin ausgelöst wird und daß im Zuge eines solchen Auslösens die in den beiden Rechnern für die betreffende Verbindung gesondert gespeicherten Verbindungsinformationen gelöscht werden. Dies bringt den Vorteil einer einfachen Steuerung für das Auslösen von Verbindungen und das Löschen der diese Verbindungen betreffenden Verbindungsinformationen mit sich.

Eine weitere Ausgestaltung des erfindungsgemäßen Verfahrens besteht darin, daß den Aufbau bzw. das Auslösen von Verbindungen betreffende Steuersignale und Nachrichtensignale bei aufgebauten Verbindungen erst dann von einer der Leitungsanschlußgruppen bzw. von einem der Rechner her über die Ringleitungsanordnung übertragen werden, nachdem diese der jeweiligen Leitungsanschlußgruppe bzw. dem jeweiligen Rechner zuvor freigegeben worden ist. Hierdurch ergibt sich den Vorteil eines gesicherten Betriebs sowohl beim Verbindungsaufbau als auch bei der Übertragung von Nachrichtensignalen über die Ringleitungsanordnung. Die gesonderte Freigabe der Ringleitungsanordnung kann dabei durch Anwendung von Leitungszugriffsverfahren erfolgen, wie sie im Zusammenhang mit den eingangs erwähnten Ringleitungssystemen bekannt sind.

Die vorstehend aufgezeigte Aufgabe wird bei einer Schaltungsanordnung der eingangs genannten Art erfindungsgemäß dadurch gelöst, daß jede der Leitungsanschlußgruppen und jeder der Rechner Mittel zum Einrichten eines ersten Verbindungsweges von einer durch Abgabe eines Rufsignals einen Verbindungsaufbau fordernden rufenden Teilnehmereinrichtung über die mit dieser verbundene Leitungsanschlußgruppe zu dem dieser Leitungsanschlußgruppe zugeordneten Rechner sowie zum Einrichten eines zweiten Verbindungsweges von dem betreffenden Rechner her über einen weiteren Rechner und die diesem zugeordnete Leitungsanschlußgruppe zu einer durch von der rufenden Teilnehmereinrichtung abgegebene Wahlinformationen ausgewählten gerufenen Teilnehmereinrichtung aufweist und daß zusätzlich jeder der Rechner einerseits über weitere Speichermittel für die Speicherung von Verbindungsinformationen bezüglich der an Verbindungen beteiligten rufenden und gerufenen Teilnehmereinrichtungen und der damit verbundenen Leitungsanschlußgruppen im Zuge der Einrichtung von ersten und zweiten Verbindungswegen und andererseits über Mittel zum Einbeziehen lediglich eines der beiden an dem Aufbau einer Verbindung beteiligten Rechner in eine Übertragung von Nachrichtensignalen nach dem Übertragen eines den Aufbau der betreffenden Verbindung bestätigenden Rufbestätigungssignals von der gerufenen zu der rufenden Teilnehmereinrichtung hin verfügt. Hierdurch ergibt sich der Vorteil eines insgesamt geringen schaltungstechnischen Aufwands, um einen sicheren Verbindungsaufbau sowie eine sichere Übertragung von Nachrichtensignalen zwischen verschiedenen Teilnehmereinrichtungen bzw. Leitungsanschlußgruppen zu gewährleisten.

Anhand von Zeichnungen wird die Erfindung nachstehend beispielsweise näher erläutert.

FIG 1 zeigt in einem Blockschaltbild den Gesamtaufbau einer Schaltungsanordnung gemäß der Erfindung,

FIG 2 veranschaulicht in einem Blockdiagramm Vorgänge beim Verbindungsaufbau zwischen zwei Leitungsanschlußgruppen,

FIG 3 veranschaulicht in einem Blockdiagramm Vorgänge bei der Übertragung von Nachrichtensignalen zwischen zwei Leitungsanschlußgruppen,

FIG 4 veranschaulicht in einem Blockdiagramm Vorgänge beim Auslösen einer Verbindung, die zwischen zwei Leitungsanschlußgruppen bestanden hat,

FIG 5 veranschaulicht in einem Blockdiagramm Vorgänge bei der Übertragung von Nachrichtensignalen zwischen zwei Leitungsanschlußgruppen im Falle der Störung bei einem der vorhandenen Rechner,

FIG 6 zeigt ausschnittweise den möglichen Aufbau eines der in der Schaltungsanordnung gemäß der Erfindung verwendeten Rechner und

FIG 7 zeigt in einem Ausschnitt den möglichen Aufbau einnerder bei der Schaltungsanordnung gemäß der Erfindung verwendeten Leitungsanschlußgruppen.

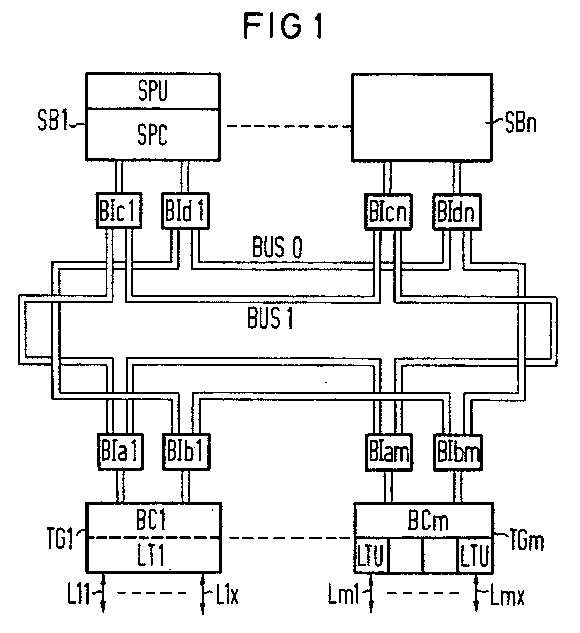

In FIG 1 ist in einem Blockschaltbild der Gesamtaufbau einer Schaltungsanordnung gemäß der Erfindung gezeigt. Die betreffende Schaltungsanordnung weist eine Mehrzahl von Leitungsanschlußgruppen TG1 bis TGm auf, mit denen jeweils eine Vielzahl von Teilnehmerstellen bzw. Übertragungsleitungen L11...L1x bzw. Lm1...Lmx verbunden ist. Die in FIG 1 dargestellten Übertragungsleitungen sind bidirektional betriebene Übertragungsleitungen, über die also Signale in beiden Übertragungsrichtungen übertragen werden.

Die vorstehend genannten Übertragungsleitungen sind jeweils an einer Leitungsanschlußeinrichtung LTU der zugehörigen Leitungsanschlußgruppe angeschlossen, wie dies bezüglich der Leitungsanschlußgruppe TGm angedeutet ist. Die betreffenden Leitungsanschlußeinrichtungen LTU der jeweiligen Leitungsanschlußgruppe bilden praktisch eine Leitungsanschlußeinheit, deren eine in FIG 1 mit LT1 bezeichnet ist. Zu jeder Leitungsanschlußgruppe TG1 bis TGm gehört noch eine sogenannte Leitungsgruppensteuerung BC1 bis BCm, welche die Übertragung der verschiedenen auftretenden Signale steuert.

Zu den in FIG 1 dargestellten Leitungsanschlußgruppen TG1 bis TGm gehören noch gesonderte Schnittstelleneinrichtungen. Die zu der Leitungsanschlußgruppe TG1 gehörenden Schnittstelleneinrichtungen sind mit Bla1 und Blb1 bezeichnet. Die zu der Leitungsanschlußgruppe TGm gehörenden Schnittstelleneinrichtungen sind mit Blam und Blbm bezeichnet. Mit diesen Schnittstelleneinrichtungen liegen die einzelnen LeitungsanschlußgruppenTG1 bis TGM in einer Ringleitungsanordnung, die insbesondere ibn nur einer Übertragungsrichtung Signale zu übertragen gestattet, im vorliegenden Fall enthält sie zwei gesonderte Ringbusleitungen deren eine mit BUS 0 bezeichnet ist und derren andere mit BUS 1 bezeichnet ist und die ebenfalls insbesondere jeweils nur in einer Übertragungsrichtung Signale übertragen.

In der Ringleitungsanordnung liegen außer den zuvor betrachteten Schnittstelleneinrichtungen noch weitere Schnittstelleneinrichtungen, die zu Rechnern SB1 bis SBn gehören, welche als Vermittlungseinheit dienen. So ist der Rechner bzw. die Vermittlungseinheit SB1 über Schnittstelleneinrichtungen Blc1 und Bld1 in die beiden Ringbusleitungen eingefügt. Der Rechner bzw. die Vermittlungseinheit SBn ist in die betreffenden Ringbusleitungen mit Schnittstelleneinrichtungen Blcn, Bldn eingefügt.

Jeder Rechner bzw. jede Vermittlungseinheit SB1 bis SBn weist eine Zentraleinheit sowie ein damit verbundenes Zentraleinheit-Steuerwerk auf, welches zusammen mit der zugehörigen Zentraleinheit als eigentlicher Vermittlungsprozessor des jeweiligen Rechners bzw. der jeweiligen Vermittlungseinheit anzusehen ist. In FIG 1 ist ein derartiger Vermittlungsprozessor SPU im Zusammenhang mit dem Rechner bzw. der Vermittlungseinheit SB1 angedeutet.

Jeder Rechner bzw. jede Vermittlungseinheit weist ferner einen Buskoppler bzw. eine Vermittlungsprozessorsteuerung auf, die bezüglich des Rechners bzw. der Vermittlungseinheit SB1 mit SPC bezeichnet ist.

Im Zusammenhang mit der Ringleitungsanordnung ist bereits erwähnt worden, daß diese aus zwei Ringbusleitungen BUS 0 und BUS 1 besteht. Jede dieser Ringbusleitungen weist eine Mehrzahl von Einzelleitungen, beispielsweise 16 Einzelleitungen auf, über die Signale jeweils parallel übertragen werden. In diesem Zusammenhang ist noch anzumerken, daß von den beiden Ringbusleitungen normalerweise nur eine Ringbusleitung im Betrieb benutzt wird; die andere Ringbusleitung steht als Reserve-Ringbusleitung zur Verfügung, wenn die genannte eine Ringbusleitung infolge eines Fehlers ausfällt.

Nachdem zuvor der Aufbau der in FIG 1 dargestellten Schaltungsanordnung erläutert worden ist, wird nunmehr auf die Arbeitsweise dieser Schaltungsanordnung näher eingegangen. Zunächst ist jedoch darauf hinzuweisen, daß bei der Schaltungsanordnung gemäß der Erfindung so vorgegangen ist, daß jeder Leitungsanschlußgruppe TG1 bis TGm einer der Rechner bzw. eine der Vermittlungseinheiten SB1 bis SBn zugeordnet ist. Dazu sind sowohl in den einzelnen Leitungsanschlußgruppen als auch in den einzelnen Vermittlungseinheiten Speicher enthalten sind, in denen die betreffenden Zuordnungen festgehalten sind. So kann in dem entsprechenden Speicher der Leitungsanschlußgruppe TG1 beispielsweise die Adresse der Vermittlungseinheit SB1 als derjenigen Vermittlungseinheit gespeichert sein, welche der betreffenden Leitungsanschlußgruppe TG1 zugeordnet ist.

4

In dem Speicher der Vermittlungseinheit SB1 kann bezüglich der mit der Leitungsanschlußgruppe TG1 verbundenen Übertragungsleitungen L11 bis L1x die Adresse der Leitungsanschlußgruppe TG1 gespeichert sein. In den Speichern der Vermittlungseinheiten bzw. Rechner SB1 bis SBn sind außerdem Informationen darüber gespeichert, welcher Rechner bzw. welche Vermittlungseinheit den jeweils übrigen Übertragungsleitungen bzw. Leitungsanschlußgruppen zugehörig ist. Dies bedeutet, daß im Grunde genommen jeder der Rechner bzw. jede der Vermittlungseinheiten SB1 bis SBn eine Leitungsanschlußgruppe der Leitungsanschlußgruppen TG1 bis TGm bedient und im übrigen Informationen über entsprechende Zugehörigkeiten bezüglich jeder der übrigen Rechner aufweist. Darüber hinaus kann jedem der Rechner bzw. jeder der Vermittlungseinheiten SB1 bis SBn einer der jeweils übrigen Rechner bzw. eine der jeweils übrigen Vermittlungseinheiten als Reserveeinheit zugeordnet sein, um bei Ausfall des erstgenannten Rechners bzw. der erstgenannten Vermittlungseinheit deren Aufgaben mitzuübernehmen.

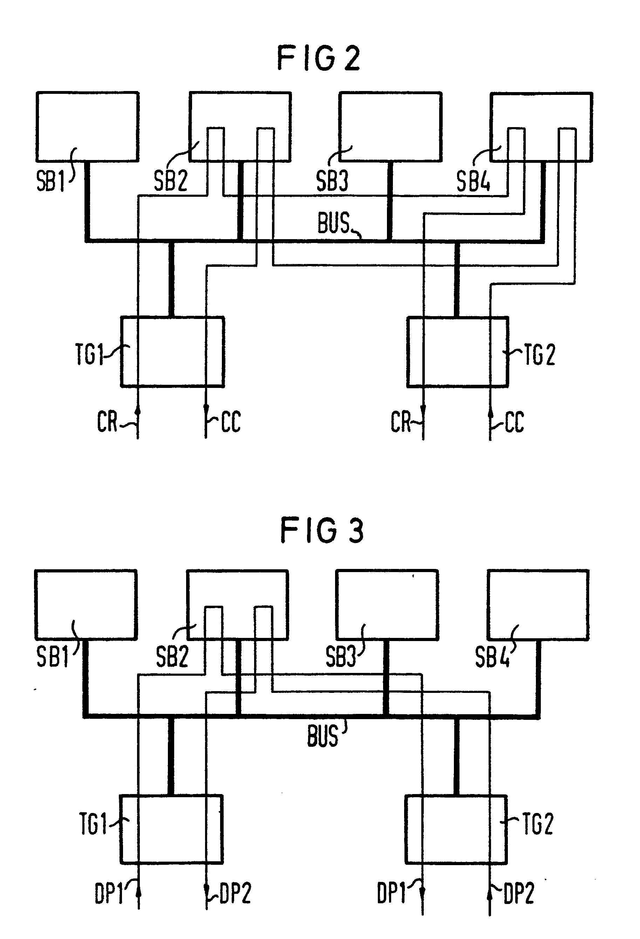

In FIG 2 sind in einem Blockdiagramm die beim Verbindungsaufbau zwischen zwei Leitungsanschlußgruppen ablaufenden Vorgänge veranschaulicht. Gemäß FIG 2 sind vier Rechner bzw. Vermittlungseinheiten SB1, SB2, SB3,SB4 und zwei Leitungsanschlußgruppen TG1 und TG2 vorgesehen, die gemeinsam an einer lediglich schematisch angedeuteten Ringbusleitung BUS angeschlossen sind. Ferner sei angenommen, daß der Leitungsanschlußgruppe TG1 der Rechner bzw. die Vermittlungseinheit SB2 zugehörig ist und daß der Leitungsanschlußgruppe TG2 der Rechner bzw. die Vermittlungseinheit SB4 zugehörig ist.

Das Auftreten eines Rufanforderungssignals CR auf einer der mit der Leitungsanschlußgruppe TG1 verbundenen Leitungen führt dazu, daß zunächst eine Verbindung zu dem zugehörigen Rechner SB2 hin aufgebaut wird. Von diesem Rechner aus wird die Verbindung dann nach Maßgabe der in ihm enthaltenen Informationen zu dem Rechner SB4 hin aufgebaut. Von diesem Rechner SB4 erfolgt schließlich der Verbindungsaufbau zu der zugehörigen Leitungsanschlußgruppe TG2. Die Leitungsanschlußgruppe TG2 gibt dann das Rufanforderungssignal CR über die gewünschte bzw. infrage kommende Übertragungsleitung weiter.

Das Rufbestätigungssignal CC, welches der Leitungsanschlußgruppe TG2 über eine ihrer Übertragungsleitungen zugeführt wird - gegebenenfalls über dieselbe Übertragungsleitung, über die zuvor das Rufanforderungssignal CR übertragen worden ist - wird von der Leitungsanschlußgruppe TG2 aus über den Rechner SB4, sodann über den Rechner SB2 und schließlich über die Leitungsanschlußgruppe TG1 weitergeleitet.

Im Zusammenhang mit FIG 2 ist noch anzumerken, daß der Aufbau einer Verbindung zwischen zwei an ein und derselben Leitungsanschlußgruppe angeschlossenen Teilnehmerstellen bzw. Übertragungsleitungen über nur einen der Rechner bzw. eine der Vermittlungseinheiten erfolgt. Dieser Rechner bzw. diese Vermittlungseinheit informiert jedoch den zugehörigen Reserve-Rechner über die einzelnen abzuwickelnden Vorgänge.

In FIG 3 ist die Nachrichtensignal-Übertragungsphase bei der in FIG 2 dargestellten Anordnung veranschaulicht. Wie aus FIG 3 ersichtlich ist, werden - Daten bzw. ganz allgemein Nachrichtensignale (also Text-, Bild-, Sprach- und sonstige Signale) zwischen den Leitungsanschlußgruppen TG1 und TG2 lediglich über den Rechner bzw. die Vermittlungseinheit SB2 der bzw. die der rufenden Leitungsanschlußgruppe zugehörig ist - übertragen bzw. vermittelt und zwar in beiden Übertragungsrichtungen. Die Nachrichtensignale können dabei insbesondere als Datenpakete auftreten, und zwar als Datenpakete DP1 in Richtung von der Leitungsanschlußgruppe TG1 zur Leitungsanschlußgruppe TG2 und als Datenpakete DP2 in der umgekehrten Übertragungsrichtung.

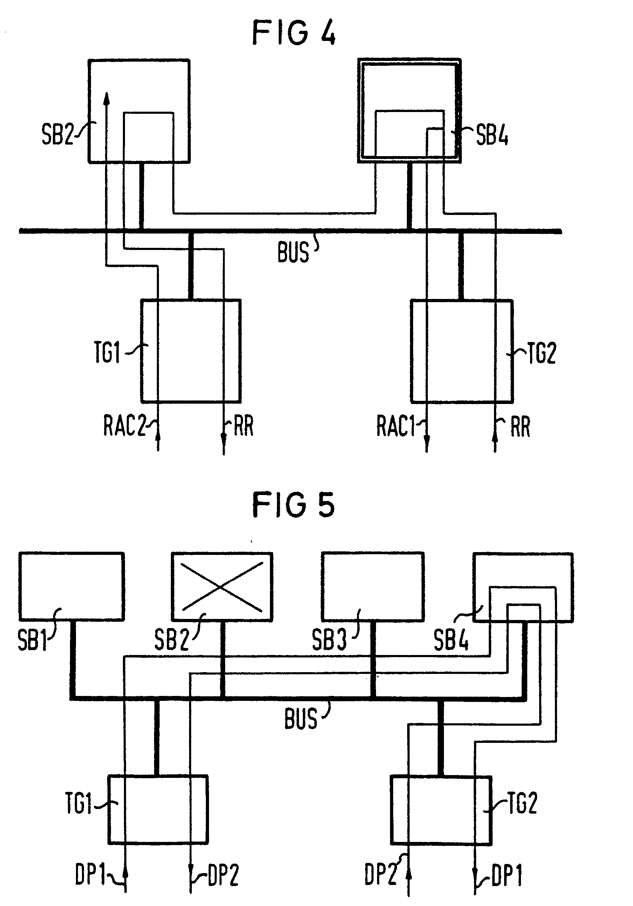

In FIG 4 sind in einem Blockdiagramm die beim Auslösen einer Verbindung zwischen zwei Leitungsanschlußgruppen ablaufenden Vorgänge veranschaulicht. Im Unterschied zu den zuvor betrachteten Verhältnissen ist hier angenommen, daß der Rechner bzw. die Vermittlungseinheit SB4 die Vermittlungsfunktion bezüglich der beiden Leitungsanschlußgruppen TG1 und TG2 übernommen hatte. Die Zuordnung zwischen Rechner bzw. Vermittlungseinheit und Leitungsanschlußgruppe ist jedoch auch hier die gleiche, wie sie im Zusammenhang mit FIG 2 erläutert worden ist.

Gemäß FIG 4 wird ein Auslöseanforderungssignal RR über eine Übertragungsleitung der Leitungsanschlußgruppe TG2 zugeführt. Dieses Auslöseanforderungssignal RR gelangt zu dem Rechner bzw. der Vermittlungseinheit SB4 hin, die daraufhin ein Auslösebestätigungssignal RAC1 an die betreffende Leitungsanschlußgruppe TG2 zurücksendet. Die betreffende Leitungsanschlußgruppe TG2 leitet dieses Auslösebestätigungssignal RAC1 über die infrage kommende Übertragungsleitung weiter. Zum anderen sendet der Rechner bzw. die Vermittlungseinheit SB4 das Auslöseanforderungssignal RR, welches er bzw. sie zuvor erhalten hat, oder ein diesem Signal entsprechendes Signal an den Rechner bzw. die Vermittlungseinheit SB2 weiter. Dieser Rechner bzw. diese Vermittlungseinheit SB2 ist nämlich derjenigen Leitungsanschlußgruppe zugehörig, die in die Verbindung miteinbezogen war, welche nunmehr ausgelöst werden soll. Die betreffende Zuordnung ist - wie oben bereits erläutert - in einem Speicher des Rechners bzw. der Vermittlungseinheit SB4 festgehalten.

Das erwähnte Auslöseanforderungssignal RR gelangt von dem Rechner bzw. der Vermittlungseinheit SB2 schließlich über die zugehörige Leitungsanschlußgruppe TG1 und von dieser über die in Frage kommende Übertragungsleitung weiter. Über diese zuletzt genannte Übertragungsleitung oder irgendeine andere Übertragungsleitung wird der Leitungsanschlußgruppe TG1 anschließendein Auslösebestätigungssignal RAC2 zugeführt,welches schließlich zu dem Rechner bzw. der Vermittlungseinheit SB2 hin übertragen wird.

Im Zusammenhang mit der gerade erläuterten Auslösephase hat sich gezeigt, daß in die Verbindungsauslösung wieder die beiden Rechner bzw. Vermittlungseinheiten einbezogen sind, die auch beim Verbindungsaufbau wirksam waren. Die in den betreffenden Rechnern bzw. Vermittlungseinheiten im Zuge der Auslösung von Verbindungen eintreffenden Auslöseanforderungssignale bzw. Auslösebestätigungssignale können in den betreffenden Rechnern bzw. Vermittlungseinheiten dazu herangezogen werden, in diesen Rechnern bzw. Vermittlungseinheiten gespeicherte Einträge über die Belegung der mit den zugehörigen Leitungsanschlußgruppen verbundenen Übertragungsleitungen zu löschen.

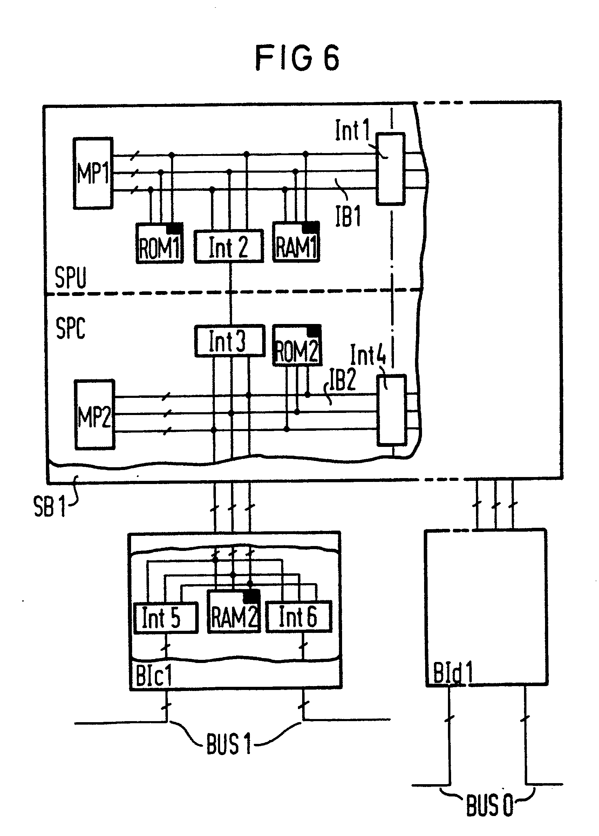

In FIG 5 sind Vorgänge veranschaulicht, die ablaufen, wenn der in eine Verbindung einbezogene Rechner bzw. die in die betreffende Verbindung einbezogene Verbindungseinheit infolge einer Störung ausfällt. Die Figur 5 zeigt dabei die gleiche Struktur, wie sie in Figuren 2 und 3 gezeigt ist. Im Unterschied zu den in FIG 3 dargestellten Verhältnissen ist gemäß FIG 5 jedoch der Rechner bzw. die Vermittlungseinheit SB4 in die Verbindung zwischen den beiden Leitungsanschlußgruppen TG1 und TG2 einbezogen, nachdem der Rechner bzw. die Vermittlungseinheit SB2 infolge einer Störung ausgefallen ist. Diese Sicherung bei der Datenübertragung ist hier deshalb möglich, weil der Rechner bzw. die Vermittlungseinheit SB4 in bezug auf den Rechner bzw. die Vermittlungseinheit SB2 für die aufgebaute Verbindung(en) als verbindungsindividuelle Reserveeinheit dient, in der Informationen über sämtliche Verbindungen enthalten sind, in die an sich der Rechner bzw. die Vermittlungseinheit SB2 einzubeziehen ist. Demgemäß werden bei der im Zusammenhang mit FIG 5 angenommenen Konstellation die Nachrichtensignale insbesondere in Form von Datensignalpaketen DP1 und DP2 zwischen den beiden Leitungsanschlußgruppen TG1 und TG2 über den Rechner bzw. die Vermittlungseinheit SB4 übertragen.

Im Zusammenhang mit den in Figuren 2 bis 5 erläuterten Verhältnissen sind der Verbindungsaufbau, die Nachrichtensignalübertragung und der Verbindungsabbau bei der Schaltungsanordnung gemäß der Erfindung betrachtet worden. Die Übertragung der einzelnen Signale, und zwar sowohl der den Verbindungsaufbau bzw. Verbindungsabbau betreffenden Signale als auch der Nachrichtensignale, erfolgt auf der in Betrieb befindlichen Ringbusleitung BUS. Um diese Übertragung vornehmen zu können, können verschiedene Übertragungsmethoden angewandt werden, wie sie aus dem eingangs betrachteten, Ringleitungssysteme betreffenden Stand der Technik bekannt sind. Die Signalübertragungen können aber auch im Zuge von sogenannten virtuellen Verbindungen erfolgen, bei denen dem jeweils übertragenen Signalblock bzw. Signalpaket die Adresse der anzusteuernden Zieleinrichtung zugehörig ist. Diese Adresse wird dann von der betreffenden Ziel-Einrichtung erkannt, woraufhin die zusammen mit der betreffenden Adresse übertragenen Signale von der betreffenden Einrichtung aufgenommen werden. Die Übertragung derartiger Signalpakete über die Ringleitungsanordnung kann auf gesonderte Freigabe der betreffenden Einrichtung hin erfolgen, wozu ein in der Ringleitungsanordnung vorhandenes gesondertes Freigabesignal dienen kann, welches von Einrichtung zu Einrichtung weitergegeben wird, wenn eine Signalübertragung abgeschlossen ist.

In FIG 6 ist ausschnittweise der mögliche Aufbau eines der Rechner bzw. einer der Vermittlungseinheiten und einer der damit verbundenen zugehörigen Schnittstelleneinrichtungen veranschaulicht. Der in Figur 6 angedeutete Rechner SB1 weist in seinem den eigentlichen Vermittlungsprozessor bildenden Bereich SPU einen Mikroprozessor MP1 auf, der an einer internen Busleitungsanordnung IB1 angeschlossen ist, die einen Adreßbus, einen Datenbus und einen Steuerbus umfaßt. Mit dieser Busleitungsanordnung sind ferner ein Programmspeicher ROM1, ein Datenspeicher RAM1 ein Schnittstellenbaustein Int1 verbunden, der die betreffende interne Busleitungsanordnung IB1 mit einer weiteren internen Busleitungsanordnung verbindet, welche mit einem dem gerade betrachteten Vermittlungsprozessor SPU entsprechenden Vermittlungsprozessor verbunden ist.

Mit der internen Busleitungsanordnung IB1 ist ferner ein weiterer Schnittstellenbaustein Int2 verbunden, der mit einem noch weiteren Schnittstellenbaustein Int3 der Vermittlungsprozessorsteuerung SPC des dargestellten Rechners SB1 verbunden ist. Die betreffende Vermittlungsprozessorsteuerung SPC weist einen eigenen Mikroprozessor MP2 auf, der mit einer internen Busleitungsanordnung IB2 verbunden ist, welche ebenfalls einen Adreßbus, einen Datenbus und einen Steuerbus aufweist. Mit dieser internen Busleitungsanordnung IB2 sind der zuletzt erwähnte Schnittstellenbaustein Int3 und ein für den Betrieb des Mikroprozessors MP2 erforderliche Programme enthaltender Festwertspeicher ROM2 verbunden. Außerdem ist die interne Busleitungsanordnung IB2 mit einem noch weiteren Schnittstellenbaustein Int4 verbunden, der die betreffende Busleitungsanordnung IB2 mit einer entsprechenden Busleitungsanordnung verbindet, welche zu einer weiteren Vermittlungsprozessorsteuerung des betrachteten Rechners SB1 gehört.

Mit der internen Busleitungsanordnung IB2 ist die in FIG 6, unten dargestellte Schnittstelleneinrichtung Blc1 verbunden. Diese Schnittstelleneinrichtung umfaßt zwei Schnittstellenbausteine Int5 und Int6, die an der erwähnten internen Busleitungsanordnung IB2 angeschlossen sind und die im übrigen mit der in FIG 1 gezeigten Ringbusleitung BUS 1 verbunden sind. Außerdem gehört zu der Schnittstelleneinrichtung Blc1 noch ein Schreib/Lese-Speicher RAM2, der ebenfalls mit der internen Busleitungsanordnung IB2 verbunden ist. Dieser Speicher RAM2 dient zur Zwischenspeicherung von Datensignalen, die ihm von einem der beiden Schnittstellenbausteine Int5, Int6 oder von dem Schnittstellenbaustein Int3 her zugeführt werden.

Im Zusammenhang mit FIG 6 ist zuvor erläutert worden, daß die internen Busleitungsanordnungen IB1 und IB2 über gesonderte Schnittstellenbausteine Int1 bzw. Int4 mit weiteren internen Busleitungsanordnungen verbunden sind, welche zu den Einrichtungen SPU bzw. SPC entsprechenden Einrichtungen des Rechners bzw. der Vermittlungseinheit SB1 gehören. Diesen weiteren Einrichtungen ist die in FIG 6 noch angedeutete Schnittstelleneinrichtung Bld1 zugehörig, welche in der Ringbusleitung BUS 0 liegt.

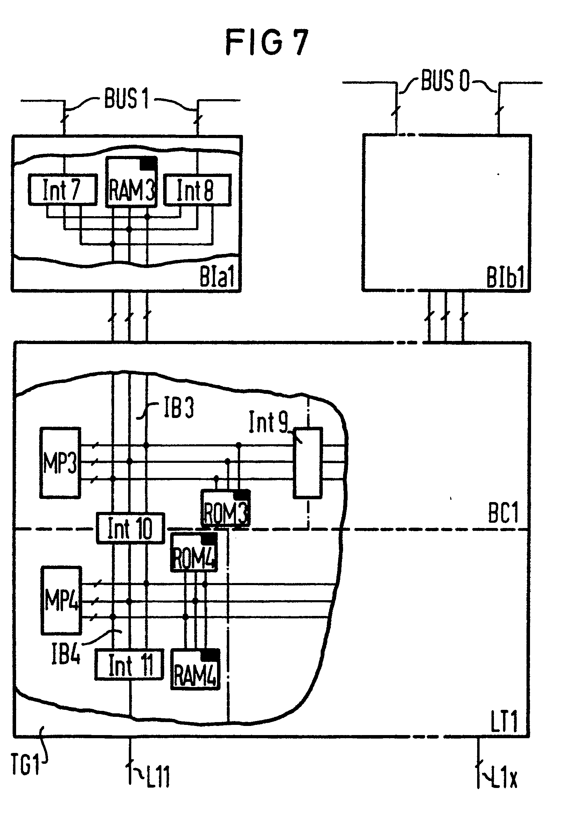

In FIG 7 ist der mögliche Aufbau einer der bei der erfindungsgemäßen Schaltungsanordnung vorhandenen Leitungsanschlußgruppen, nämlich der Leitungsanschlußgruppe TG1 samt ihrer zugehörigen Schnittstelleneinrichtungen Bla1, Blb1 veranschaulicht. Die in FIG 7 näher dargestellte Schnittstelleneinrichtung Bla1 weist wie die in FIG 6 näher gezeigte Schnittstelleneinrichtung Blcl zwei Schnittstellenbausteine Int7, Int8 auf, die in der Ringbusleitung BUS 1 liegen. Ferner gehört zu der Schnittstelleneinrichtung Bla1 ein Schreib/Lese-Speicher RAM3, der zur Zwischenspeicherung von ihm zugeführten Datensignalen dient. Der Speicher RAM3 und die beiden Schnittstellenbausteine Int7, Int8 sind gemeinsam an einer internen Busleitungsanordnung IB3 angeschlossen, die einen Adreßbus, einen Datenbus und einen Steuerbus umfaßt. Diese interne Busleitungsanordnung IB3 führt zu der Leitungsanschlußgruppe TG1 hin, und zwar zu der zugehörigen Leitungsgruppensteuerung BC1. In dieser Leitungsgruppensteuerung ist ein Mikroprozessor MP3 enthalten, der zusammen mit einem für den Betrieb erforderliche Programme enthaltenden Festwertspeicher ROM3 an der internen Busleitungsanordnung IB3 angeschlossen ist. An dieser internen Busleitungsanordnung IB3 ist ferner ein Schnittstellenbaustein Int9 angeschlossen, der die interne Busleitungsanordnung IB3 mit einer entsprechenden Busleitungsanordnung verbindet, die mit den zuvor erläuterten Einrichtungen entsprechenden Einrichtungen sowie mit der Schnittstelleneinrichtung Blb1 verbunden ist, welche in der Ringbusleitung BUS 0 liegt.

Die interne Busleitungsanordnung IB3 ist über einen noch weiteren Schnittstellenbaustein Int10 mit einer noch weiteren internen Busleitungsanordnung IB4 verbunden, die zu einer der Leitungsanschlußeinrichtungen der Leitungsanschlußeinheit LT1 gehört. Mit der betreffenden internen Busleitungsanordnung IB4 sind ein weiterer Mikroprozessor MP4, ein die zum Betrieb dieses Mikroprozessors erforderlichen Programme enthaltender Festwertspeicher ROM4, ein Datenspeicher ROM4 und ein weiterer Schnittstellenbaustein Int11 verbunden. Mit diesem Schnittstellenbaustein Int11 ist die Übertragungsleitung L11 verbunden.

Die übrigen zu der gerade betrachteten Leitungsanschlußgruppe gehörenden Übertragungsleitungen sind über dem Schnittstellenbaustein Int11 entsprechende Schnittstellenbausteine an der internen Busleitungsanordnung IB4 angeschlossen.

Die interne Busleitungsanordnung IB4 ist ferner über einen dem Schnittstellenbaustein Int10 entsprechenden Schnittstellenbaustein mit derjenigen Busleitungsanordnung verbunden, welche über den bereits erwähnten Schnittstellenbaustein Int9 mit der internen Busleitungsanordnung IB3 verbunden ist.

Vorstehend sind anhand der Figuren 6 und 7 mögliche Ausführungsformen für die im Zusammenhang mit FIG 1 erläuterten Einrichtungen beschrieben worden. Die in diesem Zusammenhang erwähnten Mikroprozessoren, Speicher und Schnittstellenbausteine können übliche Bausteine von Mikroprozessorsystemen sein. Die in FIG 6 und 7 dargestellten internen Busleitungen weisen übrigens jeweils eine Mehrzahl von Einzelleitungen enthaltende Busse auf, die jeweils durch eine einzelne Leitung mit einem kurzen Querstrich angedeutet sind.

Abschließend sei speziell im Zusammenhang mit den in Figuren 6 und 7 dargestellten Ausführungsformen noch folgendes angemerkt. Wie erläutert, sind die Rechner- bzw. Vermittlungseinheiten und die Leitungsanschlußgruppen zumindest in ihren wesentlichen Teilen doppelt ausgeführt. Der jeweils eine Teil dieser Einrichtungen ist mit der Ringbusleitung BUS1 verbunden, und der jeweils andere Teil ist mit der Ringbusleitung BUS 0 verbunden. Wie im Zusammenhang mit FIG 1 bereits erwähnt, ist lediglich eine dieser Ringbusleitungen im Betrieb, während die andere Ringbusleitung normalerweise in Reserve gehalten ist. Wenn nun der Fall eintritt, daß die gerade im Betrieb befindliche Ringbusleitung gestört ist, so erfolgt ein Übergang auf die noch intakte Ringbusleitung. Zu diesem Zweck werden über die erwähnten Schnittstellenbausteine Int1, Int4, Int9 entsprechende Umsteuersignale von der jeweils gestörten Einheit an die jeweils intakte Einheit übermittelt, um eine Umsteuerung zu bewirken. Die damit zusammenhängenden Vorgänge werden hier jedoch nicht weiter ins Einzelne gehend erläutert.

Im Zusammenhang mit den bei der Schaltungsanordnung gemäß der Erfindung verwendeten Rechnern bzw. Vermittlungseinheiten ist oben erläutert worden, daß zu jedem Rechner bzw. jeder Vermittlungseinheit ein Reserve-Rechner bzw. eine Reserve-Vermittlungseinheit existiert. Die betreffenden Reserveeinrichtungen sind dabei gewissermaßen verbindungsindividuell vorgesehen; dies bedeutet, daß die jeweilige Reserveeinrichtung die der jeweils angerufenen Teilnehmerstelle bzw. Übertragungsleitung zugehörige Rechner- bzw. Vermittlungseinheit ist. Dabei ist erläutert worden, daß sowohl während des Verbindungsaufbaus als auch während der Nachrichtensignalübertragung von dem jeweils gestörten Rechner bzw. der jeweils gestörten Vermittlungseinheit auf den intakten Reserve-Rechner bzw. auf die intakte Reserve-Vermittlungseinheit übergegangen werden kann. Es dürfte einzusehen sein, daß ein entsprechender Übergang auch dann möglich ist, wenn weder Verbindungen aufgebaut noch Nachrichtensignale übertragen werden. In einem solchen Fall kann so vorgegangen sein, daß der jeweils gestörte Rechner bzw. die jeweils gestörte Vermittlungseinheit die zugehörige Leitungsanschlußgruppe über das Vorliegen des Fehlerzustands informiert, woraufhin die Zuordnung der betreffenden Leitungsanschlußgruppe zu einem oder mehreren festgelegten anderen Rechnern bzw. Vermittlungseinheiten geändert wird. Damit werden also im Einzelfall unterschiedliche Reserve-Rechner bzw. Vermittlungseinheiten für einen Rechner bzw. eine Vermittlungseinheit benutzt, und zwar in Abhängigkeit davon, ob der betreffende Rechner bzw. die betreffende Vermittlungseinheit und der als verbindungsindividueller Rechner in Frage kommende Rechner bereits in eine Verbindung einbezogen sind oder nicht.

## Ansprüche

1. Verfahren zum Herstellen von Verbindungen für eine Übertragung von Nachrichtensignalen zwischen Teilnehmereinrichtungen, die über Leitungsanschlußgruppen (TG1, ..., TGm) mit einer Fernmeldevermittlungsanlage, insbesondere mit einer Datenvermittlungsanlage, verbunden sind, in welcher die Leitungsanschlußgruppen zusammen mit Rechnern (SB1, ..., SBn) an eine Ringleitungsanordnung (BUS0, BUS1) angeschlossen sind und diese Rechner jeweils einer der Leitungsanschlußgruppen zugeordnet sind sowie über Informationen bezüglich der Zuordnung zwischen den einzelnen Leitungsanschlußgruppen und den Rechnern verfügen,

**dadurch gekennzeichnet,**

daß auf die Abgabe eines einen Verbindungsaufbau fordernden Rufsignals von einer rufenden Teilnehmereinrichtung hin ein erster Verbindungsweg über die mit der betreffenden rufenden Teilnehmereinrichtung verbundene Leitungsanschlußgruppe zu dem dieser Leitungsanschlußgruppe zugeordneten Rechner sowie nach Maßgabe von durch die betreffende rufende Teilnehmereinrichtung abgegebenen, eine der übrigen Teilnehmereinrichtungen als gerufene Teilnehmereinrichtung bezeichnenden Wahlinformationen ein zweiter Verbindungsweg von dem genannten Rechner her über einen weiteren Rechner und die diesem zugeordnete Leitungsanschlußgruppe zu der betreffenden gerufenen Teilnehmereinrichtung hin eingerichtet werden,

daß beim Einrichten eines ersten und zweiten Verbindungsweges Verbindungsinformationen bezüglich der an der betreffenden Verbindung beteiligten rufenden und gerufenen Teilnehmereinrichtungen und der damit verbundenen Leitungsanschlußgruppen in den beiden Rechnern hinterlegt werden

und daß nach dem Übertragen eines den Verbindungsaufbau bestätigenden Rufbestätigungssignals von der betreffenden gerufenen Teilnehmereinrichtung zu der betreffenden rufenden Teilnehmereinrichtung hin Nachrichtensignale lediglich unter Einbeziehung eines der beiden Rechner übertragen werden.

2. Verfahren nach Anspruch 1,
   **dadurch gekennzeichnet,**
   daß im Normalzustand einer aufgebauten Verbindung derjenige Rechner in die Übertragung von Nachrichtensignalen einbezogen wird, welcher der mit der rufenden Teilnehmereinrichtung verbundenen Leitungsanschlußgruppe zugeordnet ist.

3. Verfahren nach Anspruch 1 oder 2,
   **dadurch gekennzeichnet,**
   daß eine aufgebaute Verbindung auf ein von einer der an dieser Verbindung beteiligten Teilnehmereinrichtungen abgegebenes, über die beiden zuvor am Verbindungsaufbau beteiligten Rechner zu der jeweils anderen Teilnehmereinrichtung übertragenes Auslösesignal hin
ausgelöst wird
und daß im Zuge eines solchen Auslösens die
in den beiden Rechnern für die betreffende
Verbindung gesondert gespeicherten Verbindungsinformationen gelöscht werden.

4. Verfahren nach einem der Ansprüche 1 bis 3,
**dadurch gekennzeichnet,**
daß den Aufbau bzw. das Auslösen von Verbindungen betreffende Steuersignale und
Nachrichtensignale bei aufgebauten Verbindungen erst dann von einer der Leitungsanschlußgruppen (TG1, ..., TGm) bzw. von einem der
Rechner (SB1, ..., SBn) her über die Ringleitungsanordnung (BUS0, BUS1) übertragen
werden, nachdem diese der jeweiligen Leitungsanschlußgruppe bzw. dem jeweilige
Rechner zuvor freigegeben worden ist.

5. Schaltungsanordnung zum Herstellen von Verbindungen für eine Übertragung von Nachrichtensignalen zwischen Teilnehmereinrichtungen,
die über Leitungsanschlußgruppen (TG1, ...,
TGm) mit einer Fernmeldevermittlungsanlage,
insbesondere mit einer Datenvermittlungsanlage, verbunden sind, in welcher die Leitungsanschlußgruppen zusammen mit Rechnern (SB1,
..., SBn) an eine Ringleitungsanordnung
(BUS0, BUS1) angeschlossen sind und dieseRechner jeweils einer der Leitungsanschlußgruppen zugeordnet sind sowie über Speichermittel für die Speicherung von Informationen
bezüglich der Zuordnung zwischen den einzelnen Leitungsanschlußgruppen und den Rechnern verfügen,
**dadurch gekennzeichnet,**
daß jede der Leitungsanschlußgruppen (TG1,
..., TGm) und jeder der Rechner (SB1, ..., SBn)
Mittel zum Einrichten eines ersten Verbindungsweges von einer durch Abgabe eines
Rufsignals einen Verbindungsaufbau fordernden rufenden Teilnehmereinrichtung über die
mit dieser verbundene Leitungsanschlußgruppe
zu dem dieser Leitungsanschlußgruppe zugeordneten Rechner sowie zum Einrichten eines
zweiten Verbindungsweges von dem betreffenden Rechner her über einen weiteren Rechner
und die diesem zugeordnete Leitungsanschlußgruppe zu einer durch von der rufenden Teilnehmereinrichtung abgegebene Wahlinformationen ausgewählten gerufenen Teilnehmereinrichtung aufweist
und daß zusätzlich jeder der Rechner (SB1, ...,
SBn) einerseits über weitere Speichermittel für
die Speicherung von Verbindungsinformationen
bezüglich der an Verbindungen beteiligten rufenden und gerufenen Teilnehmereinrichtungen
und der damit verbundenen Leitungsanschlußgruppen (TG1, ..., TGm) im Zuge der Einrichtung von ersten und zweiten Verbindungswegen
und andererseits über Mittel zum Einbeziehen
lediglich eines der beiden an dem Aufbau einer Verbindung beteiligten Rechner (SB1, ...,
SBn) in eine Übertragung von Nachrichtensignalen nach dem Übertragen eines den Aufbau
der betreffenden Verbindung bestätigenden
Rufbestätigungssignals von der gerufenen zu
der rufenden Teilnehmereinrichtung hin verfügt.

## Claims

1. Method for establishing connections for a
transmission of communication signals between subscriber facilities which are connected
via trunk groups (TG1, ..., TGm) to a communications exchange, in particular a data exchange, in which exchange the trunk groups,
together with processors (SB1, ..., SBn), are
connected to a loop arrangement (BUS0,
BUS1) and these processors are in each case
allocated to one of the trunk groups, and have
information relating to the coordination between the individual trunk groups and the processors, characterised in that, following the
output of a ringing signal requesting the setting
up of a connection from a calling subscriber
facility, a first connecting path is set up via the
trunk group connected to the relevant calling
subscriber facility to the processor allocated to
this trunk group and, as determined by dialling
information output by the relevant calling subscriber facility and designating one of the remaining subscriber facilities as called subscriber facility, a second connecting path is set up
from the said processor via a further processor
and the trunk group allocated to this processor
to the relevant called subscriber facility, in that
during the setting up of a first and second
connecting path, connecting information with
respect to the calling and called subscriber
facilities involved in the relevant connection
and the associated trunk groups is stored in
the two processors and in that after the transmission of a call acknowledgement signal acknowledging the setting up of the connection
from the relevant called subscriber facility to
the relevant calling subscriber facility, communication signals are only transmitted with the
inclusion of one of the two processors.

2. Method according to claim 1, characterised in that in the normal state of an established connection, the processor which is allocated to the trunk group connected to the calling subscriber facility is included in the transmission of communication signals.

3.  Method according to Claim 1 or 2, characterised in that an established connection is released following a release signal output by one of the subscriber facilities involved in this connection and transmitted via the two processors previously involved in the setting up of the connection to the respective other subscriber facility and in that during such releasing, the connection information stored separately for the relevant connection in the two processors is deleted.

4.  Method according to one of Claims 1 to 3, characterised in that control signals relating to the setting-up and the releasing of connections and communication signals in the case of established connections are only transmitted from one of the trunk groups (TG1, ..., TGm) or, respectively, from one of the processors (SB1, ..., SBn) via the loop arrangement (BUS0, BUS1) after the latter has been enabled for the respective trunk group or the respective processor, respectively.

5.  Circuit arrangement for establishing connections for a transmission of communication signals between subscriber facilities which are connected via trunk groups (TG1, ..., TGm) to a communications exchange, in particular a data exchange, in which exchange the trunk groups, together with processors (SB1, ..., SBn), are connected to a loop arrangement (BUS0, BUS1) and these processors are in each case allocated to one of the trunk groups and have storage means for storing information relating to the coordination between the individual trunk groups and the processors, characterised in that each of the trunk groups (TG1, ..., TGm) and each of the processors (SB1, ..., SBn) has means for setting up a first connection path from a calling subscriber facility requesting the setting up of a connection by outputting a ringing signal, via the trunk group connected to it, to the processor allocated to this trunk group and for setting up a second connecting path from the relevant processor via a further processor and the trunk group allocated to the latter to a called subscriber facility selected by the dialling information output by the calling subscriber facility and in that, additionally, each of the processors (SB1, ..., SBn) has, on the one hand, further storage, means for storing connection information with respect to the calling and called subscriber facilities involved in connections and the associated trunk groups (TG1, ..., TGm) during the setting-up of first and second connecting paths and, on the other hand, means for including only one of the two processors (SB1, ..., SBn) involved in the setting-up of a connection into a transmission of communication signals after the transmission of a call acknowledgement signal acknowledging the setting-up of the relevant connection from the called to the calling subscriber facility.

**Revendications**

1.  Procédé pour établir des liaisons pour une transmission de signaux d'informations entre des dispositifs d'abonnés, qui sont raccordés par l'intermédiaire de groupes de raccordement de lignes (TG1...TGm) à un central de télécommunications, notamment une installation de commutation de données, dans laquelle les groupes de raccordement de lignes sont raccordés, ainsi que des ordinateurs (SB1...SBn), à un dispositif de lignes en anneau (BUS0, BUS1) et ces ordinateurs sont associés respectivement à l'un des groupes de raccordement de lignes et disposent d'informations concernant l'association entre les différents groupes de raccordement de lignes et les ordinateurs,
    caractérisé par le fait
    que lors de la délivrance d'un signal d'appel, qui demande l'établissement d'une liaison, de la part d'un dispositif d'abonné appelant, une première voie de liaison est établie, par l'intermédiaire du groupe de raccordement de lignes raccordé au dispositif d'abonné appelant considéré, avec l'ordinateur associé à ce groupe de raccordement de lignes, et en fonction d'informations de sélection délivrées par le dispositif d'abonné appelant considéré et désignant l'un des autres dispositifs d'abonnés comme étant le dispositif d'abonné appelant, une seconde voie de liaison est établie depuis ledit ordinateur, par l'intermédiaire d'un autre ordinateur et du groupe de raccordement de lignes associé à cet ordinateur, au dispositif d'abonné appelé considéré, que lors de l'établissement de première et seconde voies de liaison, des informations de liaison concernant des dispositifs d'abonnés appelant et appelé, qui participent à la liaison considérée et les groupes de raccordement de lignes qui y sont raccordés, sont mémorisées dans les deux ordinateurs, et qu'après la transmission d'un signal de confirmation d'appel, qui confirme l'établissement d'une liaison, des signaux d'informations sont transmis depuis le dispositif d'aboné appelé considéré en direction du dispositif d'abonné appelant considéré, uniquement moyennant la mise en oeuvre de l'un des deux ordinateurs.

2. Procédé suivant la revendication 1, caractérisé par le fait que, lorsqu'une liaison établie est dans son état normal, l'ordinateur, qui est associé au groupe de raccordement de lignes raccordé au dispositif d'abonné appelant, est inséré dans la transmission de signaux d'informations.

3. Procédé suivant la revendication 1 ou 2, caractérisé par le fait qu'une liaison établie est interrompue lors de l'apparition d'un signal de suppression délivré par l'un des dispositifs d'abonnés participant à cette liaison et transmis à l'autre dispositif d'abonné respectif par l'intermédiaire des deux ordinateurs participant à l'établissement de la liaison, et qu'au cours d'une telle suppression, les informations de liaison mémorisées de façon particulière dans les deux ordinateurs pour la liaison concernée, sont effacées.

4. Procédé suivant l'une des revendications 1 à 3, caractérisé par le fait que des signaux de commande concernant l'établissement et la suppression de liaisons et des signaux d'informations ne sont, dans le cas de liaisons établies, transmis par l'un des groupes de raccordement de lignes (TG1,...,TGm) ou par l'un des ordinateurs (SB1,...,SBn) par l'intermédiaire du dispositif de lignes en anneau (BUS0, BUS1) qu'une fois que ce dispositif a été préalablement libéré pour le groupe respectif de raccordement de lignes ou pour l'ordinateur respectif.

5. Montage pour l'établissement de liaisons pour une transmission de signaux d'informations entre des dispositifs d'abonnés, qui sont raccordés par l'intermédiaire de groupes de raccordement de lignes (TG1,...,TGm) à un central de télécommunications, notamment une installation de commutation de données, dans laquelle les groupes de raccordement de lignes sont raccordés, ainsi que des ordinateurs (SB1,...,SBn), à un dispositif de lignes en anneau (BUS0, BUS1) et ces ordinateurs sont associés respectivement à l'un des groupes de raccordement de lignes et disposent d'informations concernant l'association entre les différents groupes de raccordement de lignes et les ordinateurs,

caractérisé par le fait que chacun des groupes de raccordement de lignes (TG1,...,TGm) et chacun des ordinateurs (SB1,...,SBn) comportent des moyens pour établir une première voie de liaison partant d'un dispositif d'abonné appelant demandant l'établissement d'une liaison au moyen de la délivrance d'un signal d'appel, par l'intermédiaire du groupe de raccordement de lignes associé à ce dispositif, en direction d'un ordinateur associé à ce groupe de raccordement de lignes, ainsi que pour l'établissement d'une seconde voie de liaison partant de l'ordinateur considéré, passant par un autre ordinateur et le groupe de raccordement de lignes associé à ce dernier et aboutissant à un dispositif d'abonné appelé sélectionné par des informations de sélection délivrées par le dispositif d'abonné appelant, et qu'en outre chacun des ordinateurs (SB1,...,SBn) dispose d'une part d'autres moyens de mémoire servant à mémoriser des informations de liaison concernant les dispositifs d'abonnés sont raccordés, lors de l'établissement de première et seconde voies de liaison et, d'autre part des moyens pour introduire uniquement l'un des deux ordinateurs (SB1,...,SBn), participant à l'établissement d'une liaison, dans une transmission de signaux d'informations après la transmission d'un signal de confirmation d'appel confirmant l'établissement de la liaison considérée, depuis le dispositif d'abonné appelé en direction du dispositif d'abonné appelant.

# FIG 1

# FIG 2

SB1　SB2　SB3　SB4

BUS

TG1　TG2

CR　CC　CR　CC

# FIG 3

SB1　SB2　SB3　SB4

BUS

TG1　TG2

DP1　DP2　DP1　DP2

# FIG 4

SB2

SB4

BUS

TG1

TG2

RAC2

RR

RAC1

RR

# FIG 5

SB1

SB2

SB3

SB4

BUS

TG1

TG2

DP1

DP2

DP2

DP1

# FIG 6

# FIG 7